# FASCICULE DE BREVET EUROPEEN

(11) **EP 3 496 983 B1**
(45) Date de publication et mention de la délivrance du brevet: **12.01.2022**
(21) Numéro de dépôt: 17765211.2
(22) Date de dépôt: 28.07.2017
(51) Int. Cl.: B60W 30/20, B60W 50/00

(54) **PROCEDE D'AMORTISSEMENT DES OSCILLATIONS DE LA VITESSE DE TORSION D'UNE TRANSMISSION**
VERFAHREN ZUR DÄMPFUNG VON SCHWANKUNGEN BEI DER TORSIONSGESCHWINDIGKEIT EINES GETRIEBES
METHOD FOR DAMPING FLUCTUATIONS IN THE TORSION SPEED OF A TRANSMISSION

(30) Priorité: 11.08.2016 FR 1657704
(43) Date de publication de la demande: 19.06.2019
(73) Titulaire: PSA Automobiles SA, 78300 Poissy (FR)
(72) Inventeur: GRILL, Andreas, 78330 Fontenay le Fleury (FR)
(86) Numéro de dépôt international: PCT/FR2017/052136
(87) Numéro de publication internationale: WO 2018/029416

(56) Documents cités:
- WO-A1-2015/183160
- DE-A1- 10 035 521
- US-A1- 2003 229 429
- US-A1- 2015 251 649

## Description

La présente invention concerne un procédé d'amortissement des oscillations de la vitesse de torsion d'une transmission entraînée par une motorisation à commande numérique, ainsi qu'un système et un véhicule mettant en œuvre un tel procédé.

Une transmission transmettant un couple entre une motorisation et une charge, en particulier un arbre de transmission, présente une certaine flexibilité qui associée à des inerties formées par la motorisation, la transmission et la charge, présente des modes propres de vibrations en torsion qui peuvent être excitées.

En particulier le moteur thermique d'un véhicule automobile entraîne le véhicule par une chaîne cinématique comprenant un système de couplage comme un embrayage, une boîte de vitesses, et des arbres de transmission liés chacun à une roue motrice du véhicule.

Les moteurs thermiques sont aujourd'hui contrôlés par une commande numérique qui prend en compte la demande du conducteur ainsi que différents paramètres de fonctionnement du véhicule, pour déterminer le couple de consigne délivré par ce moteur.

La chaîne cinématique du véhicule comportant ses flexibilités et ses inerties, peut être excitée suivant des modes propres entrant en résonance. En prenant en compte les caractéristiques du véhicule, en particulier la masse et les raideurs de suspension, on peut obtenir des oscillations longitudinales du véhicule qui peuvent être désagréables.

Pour limiter les oscillations longitudinales du véhicule, un type de procédé connu de détermination d'un couple correcteur à appliquer par le moteur thermique, présenté notamment par le document FR-B1-3003221, comprend les étapes successives de détermination de la vitesse longitudinale instantanée du véhicule, de détermination de la vitesse de rotation instantanée du moteur, de calcul de la valeur de la partie oscillatoire de la vitesse longitudinale en fonction de ces vitesses longitudinale et de rotation, puis de détermination d'un couple correcteur appliqué par le moteur en fonction de cette valeur de la partie oscillatoire.

Toutefois ce type de procédé ne donne pas un niveau de performance élevé, il est relativement complexe à mettre au point, et présente un faible niveau de standardisation en nécessitant des développements importants pour les différents types de véhicule.

D'une manière générale un procédé connu d'amortissement des oscillations d'une transmission de couple entraînée par un moteur à commande numérique appliquant une vitesse et un couple sur une entrée appelée primaire, comporte une première fonction d'agrément préventif qui a pour objectif d'adapter la consigne de couple appliquée sur le primaire, une deuxième fonction d'agrément curatif qui a pour objectif d'amortir les oscillations de la vitesse de torsion de la transmission, et une troisième fonction qui supervise le niveau d'application des commandes de l'agrément curatif en fonction de situations de vie particulières.

Pour un véhicule automobile les situations de vie particulières peuvent être notamment la régulation du système de freinage du véhicule, ou le découplage de la chaîne de traction de la motorisation.

La loi de commande de la fonction d'agrément curatif avec ces procédés connus consiste généralement à amortir les oscillations mesurées de la vitesse de rotation du primaire par une mesure de cette vitesse, et par une action sur le couple délivré sur ce primaire.

On utilise pour cela un correcteur à action dérivée, permettant d'appliquer un profil de couple primaire en opposition de phase aux oscillations mesurées de la vitesse de rotation de ce primaire. L'action dérivée est appliquée ensuite par un filtrage passe bande dans une plage de fréquence centrée autour de la fréquence de résonance de la transmission.

On connait par exemple le document de brevet WO-A1-2015183160 divulguant le préambule de la revendication 1.

Toutefois ce type de procédé se limite à amortir les oscillations mesurées de la vitesse du primaire. De plus les systèmes de contrôle existants sont réalisés avec un correcteur à action dérivée seule, qui présente des contraintes élevées de stabilité.

Les fonctions d'agrément curatif obtenues de cette manière ont des performances d'amortissement limitées. De plus les dispositifs mettant en œuvre ces fonctions nécessitent des plages de commande en couple primaire importantes, et limitent la bande passante globale de la fonction de transfert en couple de la transmission.

La présente invention a notamment pour but d'éviter ces inconvénients de la technique antérieure.

Elle propose à cet effet un procédé d'amortissement des oscillations de la vitesse de torsion d'une transmission comportant en entrée un primaire recevant un couple primaire d'une motorisation à commande numérique, pour le transmettre en sortie à une charge qui est soumise à un couple de charge externe, la commande de la motorisation mettant en œuvre une fonction d'agrément curatif qui a pour objectif d'amortir les oscillations de la vitesse de torsion de la transmission, ce procédé étant remarquable en ce qu'il mesure la vitesse de torsion de la transmission par une mesure des vitesses du primaire et de sa charge, et en ce qu'il contrôle cette vitesse de torsion et sa dérivée dans le temps à partir d'une consigne de vitesse de torsion et de sa dérivée dans le temps, et à partir de la mesure de la vitesse de torsion et de sa dérivée dans le temps.

Un avantage de ce procédé d'amortissement est qu'il permet d'améliorer le compromis performance et robustesse grâce au remplacement du contrôle de la dérivée de la vitesse du primaire par une boucle de contrôle de la dérivée de la vitesse de torsion de la transmission, et grâce à la création d'une boucle de contrôle de la vitesse de torsion.

L'invention a aussi pour objet un système mettant en œuvre un procédé d'amortissement comprenant les caractéristiques précédentes, qui comporte des boucles de contrôle coordonnées et filtrées dans une fonction de filtrage passe bande de la fonction d'agrément curatif, qui est centrée autour de la fréquence de résonance de la transmission, la fonction de filtrage passe bande pouvant interfacer et filtrer un premier correcteur à action dérivée recevant la dérivée de la vitesse de consigne de torsion, à laquelle est soustraite la dérivée de la vitesse mesurée de torsion pour donner un couple secondaire dérivé, un deuxième correcteur à action proportionnelle recevant la vitesse de consigne de torsion, à laquelle est soustraite la vitesse mesurée de torsion pour donner un couple secondaire proportionnel, la fonction de filtrage passe bande recevant le signal du premier et du deuxième correcteurs, pour établir un couple secondaire de consigne délivré à un troisième correcteur comportant un gain qui donne une deuxième valeur de couple primaire de consigne s'ajoutant à une première valeur de couple primaire de consigne délivrée par la fonction d'agrément préventif.

Avantageusement, la fonction de filtrage passe bande comporte un premier filtre passe haut recevant le couple secondaire proportionnel, qui délivre un premier signal à un filtre passe bas qui délivre à son tour un deuxième signal, comporte un deuxième filtre passe haut recevant le couple secondaire dérivé, pour délivrer un troisième signal qui est ajouté au premier signal pour donner un quatrième signal, le deuxième signal étant retranché du quatrième signal pour obtenir un cinquième signal qui est délivré à un premier filtre passe bande donnant un sixième signal qui s'ajoute au deuxième signal pour obtenir un septième signal, le septième signal étant appliqué à un deuxième filtre passe bande pour obtenir un huitième signal qui est retranché du septième signal pour obtenir le couple secondaire de consigne.

L'invention a aussi pour objet un dispositif physique comprenant une transmission reliant une motorisation à une charge, qui comporte un système tel que précédemment décrit.

En particulier, la motorisation peut comporter un moteur thermique entraînant la charge comprenant les roues motrices d'un véhicule automobile.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma présentant en fonction du temps différents amortissements des oscillations générées dans une transmission d'un véhicule automobile ;
- la figure 2 présente un schéma général d'un système de contrôle d'amortissement des oscillations de ce véhicule ;
- la figure 3 présente une fonction d'agrément curatif de ce système de contrôle mettant en œuvre un procédé suivant l'art antérieur ;
- la figure 4 détaille la fonction d'agrément curatif d'un système de contrôle mettant en œuvre un procédé suivant l'invention ;
- la figure 5 présente un filtrage passe bande de cette fonction d'agrément curatif ; et
- la figure 6 présente le principe de modélisation et d'estimation pour élaborer les consignes et les mesures des boucles de contrôle de ce procédé.

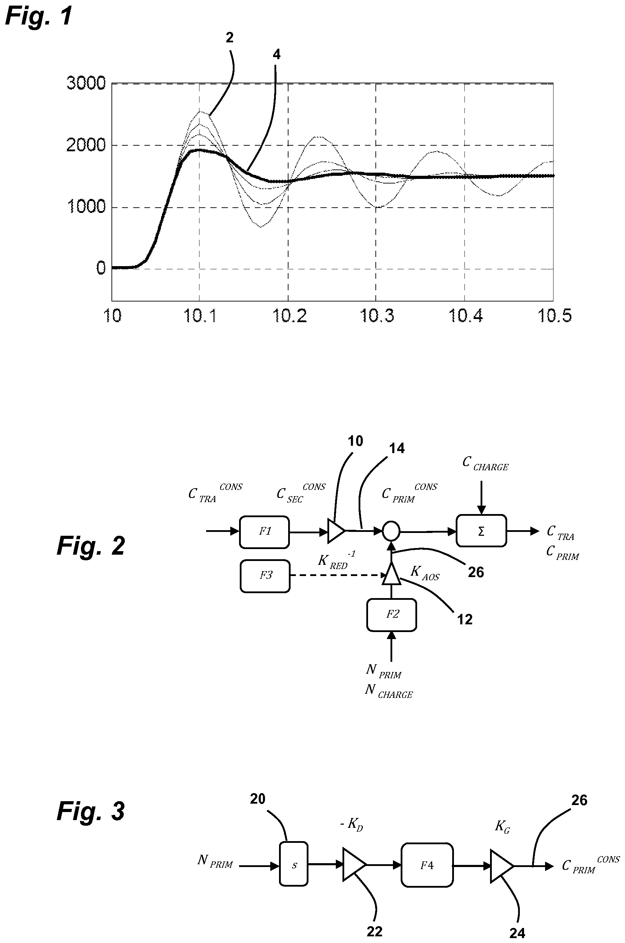

La figure 1 présente en fonction du temps exprimé en seconde, un couple sur une charge de sortie, entraînée par une transmission comportant en entrée un primaire recevant un couple primaire venant d'une motorisation à commande numérique.

Le couple s'applique brutalement après le temps 10 secondes. Ce cas se produit notamment pour un véhicule automobile équipé d'une boîte de vitesses manuelle, quand on referme rapidement l'embrayage d'entrée de cette boîte après un changement de vitesse. Ce cas se produit également pour un véhicule automobile en chaîne de traction fermée, quand le conducteur demande une variation rapide du couple à la pédale d'accélérateur.

Pour la courbe 2 présentant une commande de la motorisation sans procédé d'amortissement, on a d'abord une forte oscillation du couple qui s'amortit lentement.

On cherche avec le procédé de commande suivant l'invention, à obtenir un amortissement élevé présenté par la courbe 4.

La figure 2 présente une fonction d'agrément préventif F1 recevant une consigne de couple demandée C TRA CONS à appliquer sur la transmission, établie d'après la demande du conducteur, pour calculer une consigne de couple secondaire C SEC CONS qui est transmise à un premier correcteur 10 comportant un gain K RED -1, donnant une première partie 14 du couple primaire de consigne C PRIM CONS.

Une fonction d'agrément curatif F2 reçoit la mesure des vitesses du primaire N PRIM et de la charge N CHARGE mesurées par des capteurs, pour établir un signal qui est transmis à un deuxième correcteur 12 comportant un gain K AOS du système anti-oscillation.

Une fonction de supervision F3 supervise le niveau d'application des commandes d'agrément curatif en fonction de situations de vie particulières entraînant un risque d'oscillations de la vitesse de torsion, et délivre un signal au deuxième correcteur 12 pour qu'il adapte son gain.

La figure 3 présente une fonction d'agrément curatif comportant un opérateur dérivé dans le domaine de Laplace 20, recevant en entrée la vitesse du primaire N PRIM mesurée par un capteur, pour délivrer un signal à un correcteur 22 comportant un gain -K D, qui permet d'appliquer un profil de couple primaire en opposition de phase par rapport aux oscillations mesurées de la vitesse de rotation de ce primaire.

Le signal est transmis ensuite à une fonction de filtrage passe bande F4 qui filtre dans une plage de fréquence centrée autour de la fréquence de résonance de la transmission. La fonction de filtrage passe bande F4 applique son résultat à un correcteur 24, qui donne une deuxième partie 26 du couple primaire de consigne C PRIM CONS.

En revenant sur la figure 2, la deuxième partie 26 du couple primaire de consigne est ajoutée à la première partie 14 du couple primaire de consigne pour donner le couple primaire de consigne C PRIM CONS. Le résultat est appliqué au système physique Σ, formant une la chaîne de traction dans le cas d'un véhicule automobile, qui est physiquement soumis à un couple de charge externe C CHARGE. Le couple final C TRA correspond au couple physiquement réalisé par la chaîne de traction.

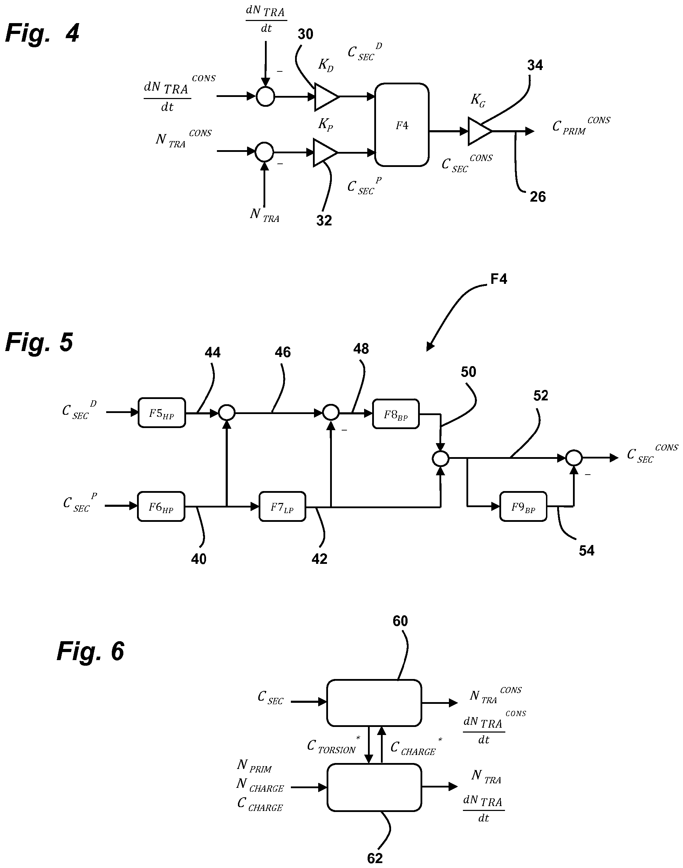

La figure 4 présente une fonction d'agrément curatif d'un procédé de contrôle selon l'invention, utilisant des mesures de la vitesse de torsion de la transmission N TRA établies par comparaison entre la vitesse du primaire N PRIM et la vitesse de la charge N CHARGE, pour agir sur le couple primaire.

Un premier correcteur à action dérivée 30 comportant un gain KD, reçoit la dérivée par rapport au temps de la vitesse de consigne de torsion dN TRA CONS / dt, à laquelle est soustraite la dérivée par rapport au temps de la vitesse mesurée de torsion dN TRA / dt.

La fonction de filtrage passe bande F4 reçoit du premier correcteur à action dérivée 30 le signal de la boucle de contrôle de la dérivée de la vitesse de torsion, donnant une valeur du couple secondaire dérivé C SEC D.

Un deuxième correcteur à action proportionnelle 32 comportant un gain KP, reçoit la vitesse de consigne de torsion N TRA CONS, à laquelle est soustraite la vitesse mesurée de torsion N TRA.

La fonction de filtrage passe bande F4 reçoit du deuxième correcteur à action proportionnelle 32 le signal de la boucle de contrôle de la vitesse de torsion, donnant une valeur du couple secondaire primitif C SEC P.

La fonction de filtrage passe bande F4 établit la valeur du couple secondaire de consigne C SEC CONS, qui est transmise à un troisième correcteur 34 comportant un gain KG pour donner la deuxième partie 26 du couple primaire de consigne C PRIM CONS.

Comme présenté figure 2, la deuxième partie 26 du couple primaire de consigne C PRIM CONS établie par la fonction d'agrément curatif F2, s'ajoute à la première partie 14 établie par la première fonction d'agrément préventif F1, pour obtenir le couple final à appliquer C PRIM CONS.

La figure 5 présente les boucles de contrôle coordonnées et filtrées dans la fonction de filtrage passe bande F4 qui est centrée autour de la fréquence de résonance de la transmission.

Un premier filtre passe haut F6 HP reçoit le couple secondaire proportionnel C SEC P, pour délivrer un premier signal 40 à un filtre passe bas F7 LP qui délivre un deuxième signal 42.

Un deuxième filtre passe haut F5 HP reçoit le couple secondaire dérivé C SEC D, pour délivrer un troisième signal 44 qui est ajouté au premier signal 40 pour donner un quatrième signal 46.

Le deuxième signal 42 est retranché du quatrième signal 46 pour obtenir un cinquième signal 48, qui est délivré à un premier filtre passe bande F8 BP donnant un sixième signal 50 qui s'ajoute au deuxième signal 42 pour obtenir un septième signal 52.

Le septième signal 52 est appliqué à un deuxième filtre passe bande F9 BP pour obtenir un huitième signal 54, qui est retranché du septième signal 52 pour obtenir le couple secondaire de consigne C SEC CONS.

Les filtres passe haut F5 HP, F6 HP ont pour objectif d'annuler les actions d'agrément curatif en basse fréquence de manière à tendre vers une action nulle pour les fonctionnements stabilisés. Le filtre passe bas F7 LP a pour objectif de limiter l'action proportionnelle à une fréquence inférieure à la fréquence de résonance de la transmission.

Le premier filtre passe bande F8 BP a pour objectif de restreindre l'action dérivée dans une plage de fréquence centrée autour de la fréquence de résonance de la transmission. Le deuxième filtre passe bande F9 BP a pour objectif de rejeter dans la commande finale les fréquences liées à des phénomènes d'acyclisme et de bruit numérique.

La figure 6 présente le principe de modélisation et d'estimation mis en œuvre pour élaborer les consignes et les mesures des boucles de contrôle.

Des modèles internes 60 recevant le couple secondaire C SEC, établissent la vitesse de consigne de torsion N TRA CONS ainsi que la dérivée de cette vitesse de consigne de torsion dN TRA CONS / dt.

Des estimateurs 62 recevant la vitesse du primaire N PRIM, la vitesse de la charge N CHARGE et le couple de la charge externe C CHARGE, recevant des modèles internes 60 le couple de torsion modélisé C TORSION, et délivrant à ces modèles internes le couple de charge externe estimé C CHARGE, établissent la vitesse mesurée de torsion N TRA ainsi que la dérivée de cette vitesse mesurée de torsion dN TRA / dt.

D'une manière générale on peut utiliser tout type de technologie pour les capteurs de vitesse du primaire ou du secondaire, et de la charge.

Le procédé d'amortissement suivant l'invention permet de simplifier la mise au point sur les véhicules, en limitant les temps de mise au point. Il permet aussi d'obtenir une solution performante et robuste, qui est standardisée pour un grand nombre de variantes de véhicule.

Il peut s'appliquer dans différents domaines autres que la traction des véhicules automobiles. Il peut s'appliquer à tout type de technologies de motorisations qui peuvent être hydrauliques ou électriques.

## Revendications

1. - Procédé d'amortissement des oscillations de la vitesse de torsion d'une transmission (N TRA) comportant en entrée un primaire recevant un couple primaire (C PRIM) d'une motorisation à commande numérique, pour le transmettre en sortie à une charge (C TRA) qui est soumise à un couple de charge externe (C CHARGE), la commande de la motorisation mettant en œuvre une fonction d'agrément curatif (F2) qui a pour objectif d'amortir les oscillations de la vitesse de torsion de la transmission (N TRA), ce procédé mesurant la vitesse de torsion de la transmission (N TRA) par une mesure des vitesses du primaire (N PRIM) et de sa charge (N CHARGE), **caractérisé en ce qu'**il contrôle cette vitesse de torsion (N TRA) et sa dérivée dans le temps (dN TRA / dt) à partir d'une consigne de vitesse de torsion (N TRA CONS) et de sa dérivée dans le temps (dN TRA CONS / dt), et à partir de la mesure de la vitesse de torsion (N TRA) et de sa dérivée dans le temps (dN TRA / dt).

2. - Système mettant en œuvre un procédé d'amortissement selon la revendication 1, ledit système comportant des boucles de contrôle coordonnées et filtrées dans une fonction de filtrage passe bande de la fonction d'agrément curatif (F4), qui est centrée autour de la fréquence de résonance de la transmission, **caractérisé en ce que** la fonction de filtrage passe bande (F4) interface et filtre un premier correcteur à action dérivée (30) recevant la dérivée de la vitesse de consigne de torsion (dN TRA CONS / dt), à laquelle est soustraite la dérivée de la vitesse mesurée de torsion (dN TRA / dt) pour donner un couple secondaire dérivé (C SEC D), un deuxième correcteur à action proportionnelle (32) recevant la vitesse de consigne de torsion (N TRA CONS), à laquelle est soustraite la vitesse mesurée de torsion (N TRA) pour donner un couple secondaire proportionnel (C SEC P), la fonction de filtrage passe bande (F4) recevant le signal du premier (30) et du deuxième (32) correcteurs, pour établir un couple secondaire de consigne (C SEC CONS) délivré à un troisième correcteur comportant un gain (34) qui donne une deuxième partie (26) de couple primaire de consigne (C PRIM CONS) s'ajoutant à une première partie (14) de couple primaire de consigne délivrée par la fonction d'agrément préventif (F1).

3. - Système selon la revendication 2, **caractérisé en ce que** la fonction de filtrage passe bande (F4) comporte un premier filtre passe haut (F6 HP) recevant le couple secondaire proportionnel (C SEC P), qui délivre un premier signal (40) à un filtre passe bas (F7 LP) qui délivre à son tour un deuxième signal (42), comporte un deuxième filtre passe haut (F5 HP) recevant le couple secondaire dérivé (C SEC D), pour délivrer un troisième signal (44) qui est ajouté au premier signal (40) pour donner un quatrième signal (46), le deuxième signal (42) étant retranché du quatrième signal (46) pour obtenir un cinquième signal (48) qui est délivré à un premier filtre passe bande (F8 BP) donnant un sixième signal (50) qui s'ajoute au deuxième signal (42) pour obtenir un septième signal (52), le septième signal (52) étant appliqué à un deuxième filtre passe bande (F9 BP) pour obtenir un huitième signal (54) qui est retranché du septième signal (52) pour obtenir le couple secondaire de consigne (C SEC CONS).

4. - Dispositif physique comprenant une transmission reliant une motorisation à une charge, **caractérisé en ce qu'**il comporte un système selon l'une des revendications 2 ou 3.

5. - Dispositif physique selon la revendication 4, **caractérisé en ce que** la motorisation comporte un moteur thermique entraînant la charge comprenant les roues motrices d'un véhicule automobile.

## Patentansprüche

1. Verfahren zum Dämpfen der Schwingungen der Torsionsdrehzahl eines Getriebes (N TRA), das als Eingang eine Primärseite umfasst, die ein Primärdrehmoment (C PRIM) von einem numerisch gesteuerten Motor empfängt, um es am Ausgang auf eine Last (C TRA) zu übertragen die einem externen Lastmoment ausgesetzt ist (C CHARGE), die Antriebssteuerung implementiert eine kurative Freigabefunktion (F2), die darauf abzielt, die Schwingungen der Torsionsgeschwindigkeit des Getriebes (N TRA) zu dämpfen, dieses Verfahren misst die Torsionsgeschwindigkeit von das Getriebe (N TRA) durch Messen der Drehzahlen des Primärantriebs (N PRIM) und seiner Last (N CHARGE), **dadurch gekennzeichnet , dass** sie diese Torsionsgeschwindigkeit (N TRA) und ihre zeitliche Ableitung (dN TRA / dt) aus einem Torsionsgeschwindigkeits-Sollwert (N TRA CONS) und ihrer zeitlichen Ableitung (dN TRA CONS / dt) und aus der Messung der Geschwindigkeit regelt der Torsion (N TRA) und ihrer zeitlichen Ableitung (dN TRA / dt).

2. System das ein Dämpfungsverfahren nach Anspruch 1 implementiert, wobei das System koordinierte und gefilterte Regelkreise in einer Bandpassfilterfunktion der heilenden Genehmigungsfunktion (F4) umfasst, die um die Resonanzfrequenz des Getriebes zentriert ist, **dadurch gekennzeichnet, dass** die Bandpassfilterfunktion (F4) verbindet und filtert einen ersten Ableitungswirkungskorrektor (30), der die Ableitung der Solltorsionsgeschwindigkeit (dN TRA CONS / dt) empfängt, von der die Ableitung der gemessenen Torsionsgeschwindigkeit abgezogen wird (dN TRA / dt), um ein abgeleitetes Sekundärdrehmoment (C SEC D) zu erhalten, ein zweiter Proportional-Korrektor (32) erhält die Soll-Drehgeschwindigkeit (N TRA CONS), von der die gemessene Torsionsgeschwindigkeit (N TRA) subtrahiert wird. um ein proportionales sekundäres Drehmoment (C SEC P) zu erhalten, die Bandpassfilterfunktion (F4) empfängt das Signal des ersten (30) und des zweiten (32) Korrektors, für Werkbank ein sekundäres Referenzdrehmoment (C SEC CONS), das an einen dritten Korrektor geliefert wird, umfassend eine Verstärkung (34), die einen zweiten Teil (26) des primären Referenzdrehmoments (C PRIM CONS) zusätzlich zu einem ersten Teil (14) des primären Drehmomentsollwerts ergibt von der präventiven Genehmigungsfunktion (F1) geliefert.

3. System nach Anspruch 2, **dadurch gekennzeichnet, dass** die Bandpassfilterfunktion (F4) ein erstes Hochpassfilter (F6 HP) umfasst, das das proportionale Sekundärdrehmoment (C SEC P) empfängt, das ein erstes Signal (40) liefert, auf ein Tiefpassfilter (F7 LP), das wiederum ein zweites Signal (42) liefert, ein zweites Hochpassfilter (F5 HP) umfasst, das das abgeleitete Sekundärdrehmoment (C SEC D) empfängt, um ein drittes Signal (44) zu liefern, das wird zu dem ersten Signal (40) addiert, um ein viertes Signal (46) zu ergeben, wobei das zweite Signal (42) von dem vierten Signal (46) subtrahiert wird, um ein fünftes Signal (48) zu erhalten, das einem ersten Bandpassfilter zugeführt wird (F8 BP), die ein sechstes Signal (50) liefert, das zu dem zweiten Signal (42) addiert wird, um ein siebtes Signal (52) zu erhalten, wobei das siebte Signal (52) einem zweiten Bandpassfilter (F9 BP) zugeführt wird, um zu erhalten ein achtes Signal (54), das von dem siebten Signal (52) subtrahiert wird, um das sekundäre Referenzdrehmoment (C SE C-CONS).

4. Physisches Gerät mit einem Getriebe, das einen Motor mit einer Last verbindet, **dadurch gekennzeichnet, dass** es ein System nach einem der Ansprüche 2 oder 3 umfasst.

5. Physisches Gerät nach Anspruch 4, **dadurch gekennzeichnet, dass** der Motor eine Wärmekraftmaschine umfasst, die die Last antreibt, die die Antriebsräder eines Kraftfahrzeugs umfasst.

## Claims

1. Method of damping the oscillations of the torsional speed of a transmission (N TRA) comprising as input a primary receiving a primary torque (C PRIM) from a numerically controlled motor, to transmit it at the output to a load (C TRA) which is subjected to an external load torque (C CHARGE), the drive control implementing a curative approval function (F2) which aims to damp the oscillations of the torsion speed of the transmission (N TRA), this method measuring the speed of torsion of the transmission (N TRA) by measuring the speeds of the primary (N PRIM) and its load (N CHARGE), **characterized in that** it controls this torsion speed (N TRA) and its time derivative (dN TRA / dt) from a torsion speed setpoint (N TRA CONS) and its time derivative (dN TRA CONS / dt), and from the measurement of the speed of torsion (N TRA) and its derivative in time (dN TRA / dt).

2. System implementing a damping method according to claim 1, said system comprising coordinated and filtered control loops in a band-pass filtering function of the curative approval function (F4), which is centered around the resonant frequency of the transmission, **characterized in that** the band-pass filtering function (F4) interfaces and filters a first derivative action corrector (30) receiving the derivative of the setpoint speed of torsion (dN TRA CONS / dt), from which is subtracted the derivative of the measured speed of torsion (dN TRA / dt) to give a derived secondary torque (C SEC D), a second proportional action corrector (32) receiving the setpoint speed of torsion (N TRA CONS ), from which is subtracted the measured speed of torsion (N TRA) to give a proportional secondary torque (C SEC P), the band-pass filtering function (F4) receiving the signal from the first (30) and the second (32) correctors, for workbench r a secondary reference torque (C SEC CONS) delivered to a third corrector comprising a gain (34) which gives a second part (26) of the primary reference torque (C PRIM CONS) in addition to a first part (14) primary torque setpoint delivered by the preventive approval function (F1).

3. System according to claim 2, **characterized in that** the band-pass filtering function (F4) comprises a first high-pass filter (F6 HP) receiving the proportional secondary torque (C SEC P), which delivers a first signal (40) to a low pass filter (F7 LP) which in turn delivers a second signal (42), comprises a second high pass filter (F5 HP) receiving the derived secondary torque (C SEC D), to deliver a third signal (44) which is added to the first signal (40) to give a fourth signal (46), the second signal (42) being subtracted from the fourth signal (46) to obtain a fifth signal (48) which is supplied to a first band pass filter (F8 BP) giving a sixth signal (50) which is added to the second signal (42) to obtain a seventh signal (52), the seventh signal (52) being applied to a second band pass filter (F9 BP) to obtain a eighth signal (54) which is subtracted from the seventh signal (52) to obtain the secondary reference torque (C SE C CONS).

4. Physical device comprising a transmission connecting an engine to a load, **characterized in that** it comprises a system according to one of claims 2 or 3.

5. Physical device according to claim 4, **characterized in that** the engine comprises a heat engine driving the load comprising the drive wheels of a motor vehicle.
